# DEMANDE DE BREVET EUROPEEN

(11) **EP 0 675 618 A1**
(43) Date de publication de la demande: **04.10.1995**
(21) Numéro de dépôt: 95400681.3
(22) Date de dépôt: 28.03.1995
(51) Int. Cl.: H04L 12/64, H04J 3/06, H04Q 11/04

(54) **Dispositif d'adaptation entre un réseau temporel synchrone et un réseau temporel asynchrone**

(30) Priorité: 28.03.1994 FR 9403601
(71) Demandeur: ALCATEL BUSINESS SYSTEMS, F-75008 Paris (FR); FRANCE TELECOM, F-75015 Paris (FR)
(72) Inventeur: Kersale, Philippe, F-29200 Brest (FR); Guigen, Jean-Paul, F-22301 Lannion Cédex (FR)
(74) Mandataire: Schaub, Bernard

(57) **Abrégé**

L'invention concerne un dispositif d'adaptation (3) entre un premier réseau de communication (1) du type véhiculant un premier type de signal organisé en trames constituées chacune de N intervalles de temps, chaque intervalle de temps étant associé à une voie de communication distincte, et un second réseau de communication (2) du type véhiculant un second type de signal organisé en cellules de taille fixe comprenant chacune un en-tête et un champ de données, les données d'une même cellule étant associées à une même voie de communication.

## Description

Le domaine de l'invention est celui des réseaux de télécommunication permettant d'acheminer tous types d'information (sons, données numériques, etc...).

Plus précisément, l'invention concerne un dispositif d'adaptation entre deux réseaux de communication distincts, à savoir un réseau temporel synchrone et un réseau temporel asynchrone.

Contrairement aux techniques spatiales qui consistent à affecter un itinéraire physique permanent à chaque voie de communication (et donc à répartir spatialement les communications), les techniques temporelles consistent à partager dans le temps les ressources (c'est-à-dire le débit disponible sur un support de transmission ou à un point de connexion) entre une pluralité de voies de communication.

Il existe deux types de technique temporelle (ou modes de transfert temporel) qui se différencient dans la façon d'organiser les ressources partagées dans le temps.

Dans le mode de transfert temporel synchrone, les ressources sont organisées en trames récurrentes, elles-mêmes découpées en intervalles de temps. Ce sont ces intervalles de temps qui transportent les unités de données. Chaque voie de communication se voit réserver dans chaque trame un intervalle de temps de position déterminée. On parle de mode synchrone du fait que le débit mis à la disposition d'une voie est un multiple entier d'une fréquence de trame déterminée par le réseau : c'est le produit de cette fréquence de trame par le nombre d'éléments binaires affectés à la voie dans chaque trame.

Un exemple connu de réseau temporel synchrone est un réseau à base de liaisons MIC (Multiplexage par Impulsions et Codage). Dans un tel réseau, chaque trame comprend 32 intervalles de temps, et le débit pour chaque intervalle de temps est d'un octet toutes les 125 µs, soit 64 kbit/s pour chaque voie de communication. Chacun des 32 intervalles de temps étant associé à une voie, il existe donc 32 voies réparties en 2 voies de signalisation et 30 voies de communication (de parole ou de données numériques).

Dans le mode de transfert temporel asynchrone, les ressources, toujours partagées dans le temps, sont organisées en unités de données appelées paquets, qui se suivent sans référence absolue de position. L'identification de la voie de communication est donc portée par l'unité de données elle-même, dans un entête. En d'autres termes, contrairement au mode synchrone, il n'y a plus d'affectation fixe d'intervalles de temps aux unités de données d'une voie : la source peut émettre des unités de données à son rythme propre, sans référence directe avec le réseau.

Il est alors possible, en principe, de transmettre un débit quelconque dans une voie. Dans la pratique, un certain nombre de facteurs viendront corriger quelque peu cette caractéristique de principe (gestion des débits, contrôle de flux,...) sans cependant en altérer notablement l'intérêt.

Dans le cadre de l'invention, le réseau temporel asynchrone véhicule des unités de données particulières possédant une structure fixe et courte. Ces unités de données que l'on appelle cellules, sont donc un cas particulier de paquets et permettent notamment au réseau de supporter des applications en temps réel (par exemple de communication vocale ou vidéo).

Un exemple connu de réseau temporel asynchrone est un réseau ATM (pour "Asynchronous Transfer Mode" en anglo-saxon (Mode de Transfert Asynchrone)) dans lequel chaque cellule comprend 53 octets répartis en un en-tête de 5 octets (dont 1 octet de protection) et un champ d'information de 48 octets.

Les réseaux en mode temporel synchrone, qui historiquement ont été développés les premiers, sont largement répandus mais présentent l'inconvénient d'être limités en débit. Par contre, les réseaux en mode temporel asynchrone, dont le développement est beaucoup plus récent, sont peu répandus mais présentent l'avantage de pouvoir travailler à de très hauts débits.

Actuellement, un utilisateur connecté à un réseau donné (qu'il soit en mode temporel synchrone ou asynchrone) ne peut communiquer qu'avec des utilisateurs ou des services de ce réseau donné ou encore d'autres réseaux du même type, si ces autres réseaux sont reliés au réseau donné. En effet, il est clair qu'une suite de trames constituées chacune d'intervalles de temps (comme c'est le cas dans un réseau synchrone) ne peut pas être traitée comme une suite de cellules constituées chacune d'un en-tête et d'un champ de données (comme c'est le cas dans un réseau asynchrone). Or, de nombreux utilisateurs et services ne sont connectés qu'à un seul type de réseau (synchrone ou asynchrone).

Il existe donc un intérêt évident à relier un réseau en mode temporel asynchrone à un réseau en mode temporel synchrone, de façon à permettre :
- une communication entre n'importe quel utilisateur du réseau synchrone et n'importe quel utilisateur du réseau asynchrone ;
- l'accès à n'importe quel service disponible sur le réseau synchrone par un utilisateur du réseau asynchrone ; et
- si les débits des deux réseaux à relier restent compatibles, I'accès à n'importe quel service disponible sur le réseau asynchrone par un utilisateur du réseau synchrone.

L'invention a précisément pour objectif principal de fournir un dispositif d'adaptation entre un réseau en mode temporel synchrone véhiculant un signal organisé en trames constituées chacune d'une pluralité d'intervalles de temps, et un réseau en mode temporel asynchrone véhiculant un signal organisé en cellules de tailles fixes.

Cet objectif principal, ainsi que d'autres qui apparaîtront par la suite, sont atteints selon l'invention à l'aide d'un dispositif d'adaptation entre un premier réseau de communication du type véhiculant un premier type de signal organisé en trames constituées chacune de N intervalles de temps, chaque intervalle de temps étant associé à une voie de communication distincte, et un second réseau de communication du type véhiculant un second type de signal organisé en cellules de taille fixe comprenant chacune un en-tête et un champ de données, les données d'une même cellule étant associées à une même voie de communication,
ce dispositif comprenant, dans le sens d'une adaptation dudit premier réseau de communication vers ledit second réseau de communication :
- des moyens de réception d'une trame ;
- N premiers registres associés chacun à une voie de communication distincte ;
- des moyens de répartition entre lesdits N premiers registres des intervalles de temps de ladite trame reçue ;
- des moyens de génération d'une cellule par transfert dans une première mémoire de transfert du contenu d'un desdits N premiers registres quand celui-ci a atteint un seuil de remplissage prédéterminé, c'est-à-dire quand celui-ci contient un nombre de données égal au nombre de données à placer dans une cellule ;
- des moyens de transmission d'une cellule générée par lesdits moyens de génération d'une cellule ;

et, dans le sens d'une adaptation dudit second réseau de communication vers ledit premier réseau de communication :
- des moyens de réception et de stockage d'une cellule dans une seconde mémoire de transfert ;
- N seconds registres associés chacun à une voie de communication distincte ;
- des moyens de transfert dans un des N seconds registres d'une partie utile d'une cellule contenue dans la seconde mémoire de transfert ;
- des moyens de génération d'une trame par prélèvement sélectif dans les N seconds registres de blocs de données dont la taille correspond à celle des N intervalles de temps constituant une trame ;
- des moyens de transmission d'une trame générée par lesdits moyens de génération d'une trame.

Le dispositif selon l'invention constitue donc une passerelle entre un premier réseau en mode temporel synchrone et un second réseau en mode temporel asynchrone. En d'autres termes, le dispositif de l'invention permet de faire passer sur le second réseau une voie de communication provenant du premier réseau, en transformant une succession de trames constituées chacune de N intervalles de temps en une succession de cellules de taille fixe. De même, le dispositif de l'invention permet de faire passer sur le premier réseau une voie de communication provenant du second réseau, en effectuant la transformation inverse (cellules transformées en trames).

Ainsi, dans un sens, des intervalles de temps possédant une même position dans des trames reçues successivement sont assemblés et réémis dans une même cellule. Dans l'autre sens, des données utiles sont extraites de cellules entrantes et redistribuées séquentiellement sur des intervalles de temps de façon à constituer des trames à émettre.

Les première et seconde mémoires de transfert sont des mémoires de mise à plat des cellules : la première mémoire de transfert permet de générer une cellule à partir d'intervalles de temps, et la seconde mémoire de transfert permet de recevoir une cellule afin d'en extraire des intervalles de temps.

Avantageusement, le dispositif comprend, dans le sens d'une adaptation dudit premier réseau de communication vers ledit second réseau de communication :
- une première table de correspondance associant un en-tête de cellule distinct à chaque position distincte d'intervalle de temps dans une trame ;
- des premiers moyens d'identification d'une voie de communication par détermination d'une position d'intervalle de temps dans une trame pour les intervalles de temps stockés dans un premier registre ayant atteint le seuil de remplissage prédéterminé, puis interrogation de ladite première table de correspondance afin de connaître l'en-tête de cellule associé à la position d'intervalle de temps déterminée auparavant,

lesdits premiers moyens d'identification d'une voie de communication indiquant auxdits moyens de génération d'une cellule, lorsqu'un premier registre est plein, I'en-tête à transférer dans la première mémoire de transfert avec le contenu dudit premier registre plein.

Ainsi, la construction d'une cellule dans la première mémoire de transfert consiste à concaténer un en-tête (choisi parmi une pluralité d'en-têtes disponibles) avec notamment le contenu d'un premier registre plein (ce contenu étant lui-même obtenu par concaténation d'intervalles de temps possédant une même position dans des trames reçues successivement par le dispositif d'adaptation et correspondant donc à une même voie de communication).

Tous les en-têtes sont préconstruits et stockés dans une première table de correspondance. Or, chaque en-tête étant associé à une voie de communication distincte, pour savoir quel en-tête transférer dans la première mémoire de transfert, il convient de déterminer à quelle voie de communication sont associés les intervalles de temps stockés dans le premier registre plein. Pour cela, les premiers moyens d'identification d'une voie de communication interrogent la première table de correspondance en fournissant une position d'intervalle de temps commune à tous les intervalles de temps stockés dans le premier registre plein dont le contenu va constituer au moins partiellement le champ de données de la cellule à construire. En réponse à cette interrogation, les premiers moyens d'identification reçoivent de la première table de correspondance l'en-tête à placer en début de cellule, et fournissent cet en-tête aux moyens de génération d'une cellule.

De façon avantageuse, le dispositif comprend, dans le sens d'une adaptation dudit second réseau de communication vers ledit premier réseau de communication :
- une seconde table de correspondance associant une position distincte d'intervalle de temps dans une trame à chaque identificateur de voie de communication distinct contenu dans un en-tête de cellule ;
- des seconds moyens d'identification d'une voie de communication par extraction d'un identificateur de voie de communication contenu dans l'entête de la cellule stockée dans la seconde mémoire de transfert, puis interrogation de ladite seconde table de correspondance afin de connaître la position d'intervalle de temps associée à l'identificateur de voie de communication extrait auparavant,

lesdits seconds moyens d'identification d'une voie de communication indiquant auxdits moyens de transfert dans quel second registre doit être transférée la partie utile de la cellule contenue dans la seconde mémoire de transfert.

La génération d'une trame de N intervalles de temps consiste à prélever l'équivalent d'un intervalle de temps dans chacun des N seconds registres, chacun de ces N seconds registres étant associé à une position distincte d'intervalle de temps. Par ailleurs, la partie utile d'une cellule est constituée d'éléments équivalents à plusieurs intervalles de temps d'une même voie de communication. Par conséquent, pour savoir dans quel second registre transférer la partie utile d'une cellule contenue dans la seconde mémoire de transfert, il convient de déterminer à quelle voie de communication est associée cette cellule, c'est-à-dire quelle position d'intervalle de temps doit être associée aux "éléments équivalant à des intervalles de temps" de la partie utile de la cellule stockée dans la seconde mémoire de transfert.

Pour cela, les seconds moyens d'identification d'une voie de communication interrogent la seconde table de correspondance en fournissant un identificateur de voie de communication extrait auparavant de l'en-tête de la cellule stockée dans la seconde mémoire de transfert. En réponse à cette interrogation, les seconds moyens d'identification reçoivent de la seconde table de correspondance la position d'intervalle de temps (dans les trames à construire) à laquelle correspond l'identificateur de voie de communication de la cellule stockée dans la seconde mémoire de transfert. Les seconds moyens d'identification fournissent cette position d'intervalle de temps aux moyens de transfert qui en déduisent dans quel second registre doit être transférée la partie utile de la cellule contenue dans la seconde mémoire de transfert (puisque chaque second registre est associé à une position distincte d'intervalle de temps).

Dans le cas où le second réseau de communication est un réseau ATM, l'identificateur de voie de communication est par exemple le VCI (pour "Virtual Channel Identifier" en anglo-saxon (Identificateur de voie virtuelle)).

Avantageusement, ladite partie utile d'une cellule est une zone utile du champ de données qui possède une taille variable et fonction de la voie de communication à laquelle est associée ladite cellule.

Ainsi, le taux de remplissage des cellules, c'est-à-dire le rapport entre la taille de la zone utile du champ de données et la taille du champ de données lui-même, varie d'une cellule à l'autre.

Plus précisément, les cellules d'une même voie de communication possèdent des taux de remplissage identiques, alors que les cellules de deux voies de communication distinctes possèdent des taux de remplissage distincts. Un taux de remplissage distinct peut donc être prédéfini, par exemple par pas de 32 bits, pour chaque voie de communication dans le sens du premier réseau vers le second réseau, ainsi que pour chaque voie de communication dans le sens du second réseau vers le premier réseau. On peut par exemple prendre un taux de remplissage plus élevé pour une cellule transportant des données informatiques que pour une cellule transportant des données de son. En effet, en limitant la taille de la zone utile du champ de données des cellules "son", on peut se prémunir contre d'éventuels phénomènes d'écho. Par contre, un taux de remplissage plus important permet également de faciliter le traitement des cellules.

Préférentiellement, la taille du champ de données d'une cellule est supérieure audit seuil de remplissage prédéterminé des N premiers registres, et ladite première mémoire de transfert comporte une zone de complément préremplie de données de remplissage, la taille de ladite zone de complément étant égale à la différence entre ladite taille du champ de données et ledit seuil de remplissage prédéterminé des N premiers registres.

Ainsi, si le taux de remplissage des cellules est fixe, la taille de la première mémoire de transfert est exactement égale à la somme de la taille de l'en-tête, du seuil de remplissage des N premiers registres et la taille de cette zone de complément. Par conséquent, lors de chaque construction de cellule, les moyens de génération d'une cellule n'ont pas à remplir cette zone de complément (puisqu'elle est préremplie), ce qui permet un gain de temps.

De façon avantageuse, lesdits moyens de transfert comprennent au moins un pointeur de ladite seconde mémoire de transfert permettant de sélectionner uniquement une zone utile du champ de données de la cellule stockée dans ladite seconde mémoire de transfert.

Ainsi, la zone utile du champ de données constitue la partie utile de la cellule, et grâce au pointeur de la seconde mémoire de transfert, les moyens de transfert ne recopient que cette zone utile.

Avantageusement, lorsque lesdits moyens de répartition des intervalles de temps détectent un intervalle de temps inexploitable, ils le remplacent par une donnée représentative d'un silence,
et, lorsque lesdits moyens de transfert d'une partie utile d'une cellule détectent une donnée inexploitable parmi des données constituant ladite partie utile, ils la remplacent par une donnée représentative d'un silence.

Cette caractéristique présente un intérêt notamment dans le cas d'une voie de communication transportant la parole. En effet, dans ce cas, une donnée inexploitable se traduit par un bruit et il est alors préférable d'avoir un silence.

Dans un mode de réalisation préférentiel de l'invention, lorsque lesdits moyens de réception et de stockage d'une cellule sont actifs, lesdits moyens de réception d'une trame, lesdits moyens de répartition des intervalles de temps, lesdits moyens de génération d'une cellule, lesdits moyens de génération d'une trame, et les moyens de transmission d'une trame sont également actifs,
et lorsque lesdits moyens de transmission d'une cellule sont actifs, lesdits moyens de réception d'une trame, lesdits moyens de répartition des intervalles de temps, lesdits moyens de transfert d'une partie utile du champ de données d'une cellule, lesdits moyens de génération d'une trame, et les moyens de transmission d'une trame sont également actifs.

De cette façon, des mêmes moyens de traitement (par exemple un unique microprocesseur ou un processeur de signaux numériques) peuvent constituer plusieurs des moyens constituant le dispositif, ces moyens de traitement travaillant alors en temps partagé de façon à réaliser sans pertes de temps les fonctions des différents moyens qu'ils constituent.

Ainsi, lorsqu'on fabrique une cellule dans la première mémoire de transfert, on réceptionne simultanément une cellule dans la seconde mémoire de transfert, et, vice-versa, lorsqu'on traite la cellule reçue précédemment dans la seconde mémoire de transfert, on émet simultanément la cellule fabriquée précédemment dans la première mémoire de transfert.

Le temps d'émission ou de réception d'une cellule étant équivalent au temps de traitement d'une cellule, le processeur n'est donc pas en attente de traitement d'une cellule. Il est à noter que l'émission ou la réception de cellule est masquée par le temps de traitement.

Avantageusement, lesdits N premiers registres et lesdits N seconds registres sont des mémoires du type premier entré - premier sorti.

De façon avantageuse, lesdits N premiers registres, lesdits N seconds registres, ladite première table de correspondance et ladite seconde table de correspondance sont réalisés avec une mémoire unique.

Ainsi, chaque (premier ou second) registre est par exemple réalisé avec une zone distincte de cette mémoire unique, un pointeur de lecture et un pointeur d'écriture étant associés à chaque zone distincte constituant un registre.

Dans un mode de réalisation avantageux de l'invention, ledit premier type de signal est organisé en trames MIC et ledit second type de signal est organisé en cellules ATM.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma synoptique de deux réseaux de communication et d'un dispositif selon l'invention d'adaptation entre ces deux réseaux de communication ;
- la figure 2A, respectivement 2B, présente un schéma de principe de l'adaptation mise en oeuvre par le dispositif de l'invention dans un premier sens, respectivement dans un second sens ;
- la figure 3A, respectivement 3B, présente un exemple de mode de réalisation du principe d'adaptation présenté sur la figure 2A, respectivement 2B ;
- la figure 4 présente un exemple de mémoire comprise dans un dispositif selon l'invention ; et
- la figure 5 présente un schéma synoptique d'un mode de réalisation particulier d'un dispositif d'adaptation selon l'invention.

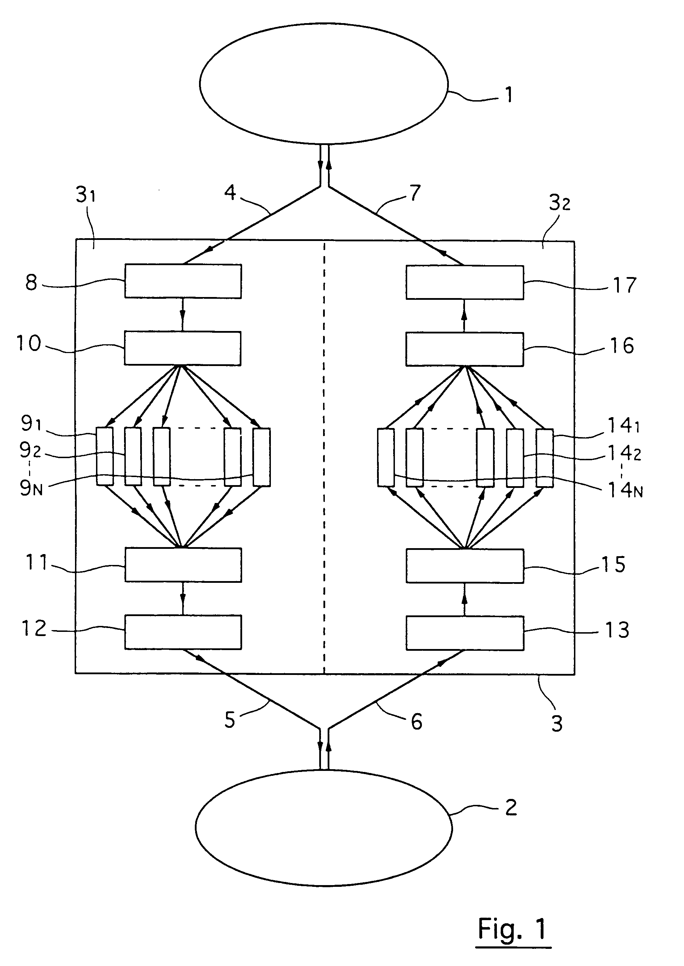

L'invention concerne donc un dispositif d'adaptation entre deux réseaux de communication distincts. Plus précisément, comme présenté sur le schéma synoptique de la figure 1, l'inventionconcerne un dispositif d'adaptation 3 entre :
- un premier réseau de communication 1 du type véhiculant un premier type de signal organisé en trames constituées chacune de N intervalles de temps (notés IT dans la suite de la description), chaque IT étant associé à une voie de communication distincte, et
- un second réseau de communication 2 du type véhiculant un second type de signal organisé en cellules de taille fixe comprenant chacune un entête et un champ de donnée, les données d'une même cellule étant associées à une même voie de communication.

Le premier réseau de communication 1 est donc un réseau en mode temporel synchrone, que l'on appellera plus simplement réseau synchrone 1 dans la suite de la description. De même, le second réseau de communication 2 est un réseau en mode temporel asynchrone, que l'on appellera plus simplement réseau asynchrone 2.

Dans le sens d'adaptation du réseau synchrone 1 vers le réseau asynchrone 2, le dispositif d'adaptation 3 reçoit un signal 4 organisé en trames et doit délivrer un signal 5 organisé en cellules. Dans le sens d'adaptation du réseau asynchrone 2 vers le réseau synchrone 1, le dispositif d'adaptation 3 reçoit un signal 6 organisé en cellules et doit délivrer un signal 7 organisé en trames.

Le dispositif d'adaptation 3 comprend deux ensembles de moyens 3₁, 3₂ permettant chacun l'adaptation dans un des deux sens.

Le premier ensemble de moyens 3₁, qui permet l'adaptation du réseau synchrone 1 vers le réseau asynchrone 2, comprend :
- des moyens 8 de réception d'une trame ;
- N premiers registres 9₁ à 9_{N} associés chacun à une voie de communication distincte ;
- des moyens 10 de répartition entre les N premiers registres 9₁ à 9_{N} des IT de la trame reçue ;
- des moyens 11 de génération d'une cellule par transfert dans une première mémoire de transfert du contenu d'un des N premiers registres 9₁ à 9_{N} quand celui-ci a atteint un seuil de remplissage prédéterminé, c'est-à-dire quand celui-ci contient un nombre de données égal au nombre de données à placer dans une cellule ; et
- des moyens 12 de transmission d'une cellule générée par les moyens 11 de génération d'une cellule.

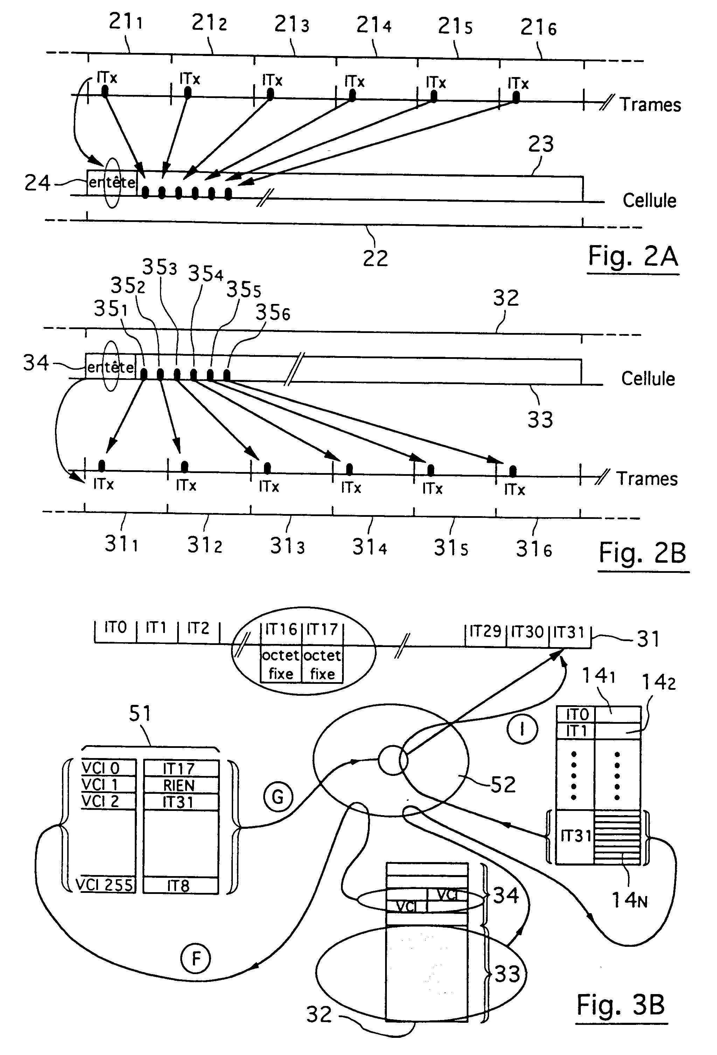

Le principe de l'adaptation mise en oeuvre par ce premier ensemble de moyens 31 est maintenant décrit en relation avec la figure 2A. A partir d'une pluralité de trames 21₁ à 21₆, il s'agit de générer une pluralité de cellules 22. La figure 2A montre la construction d'une cellule 22. Il est clair que la construction d'autres cellules se fait selon le même principe.

Dans cet exemple, on extrait le x^{ème} IT (noté ITₓ) de chaque trame reçue 21₁ à 21₆, l'ensemble des ITₓ étant placé dans le champ de données 23 d'une même cellule 22. L'entête 24 de cette cellule 22 est choisi en fonction de la position (x dans cet exemple) des IT que la cellule 22 recueille. Chaque IT d'une trame étant associé à une voie de communication distincte, tous les IT sont associés à une même voie de communication. Par conséquent, la cellule 22 qui reçoit ces IT est également associée à cette voie de communication. On a donc bien une voie de communication provenant du réseau synchrone 1 qui est prolongée sur le réseau asynchrone 2.

Le nombre N de premiers registres 9₁ à 9_{N} est donc égal au nombre d'IT dans une trame, et le x^{ème} premier registre 9ₓ est par exemple associé à la x^{ème} position d'IT (avec 1≦x≦N). Pour chaque trame reçue 21₁ à 21₆, chacun des IT est stocké dans un premier registre distinct, ITₓ étant stocké dans le x^{ème} premier registre 9ₓ.

La taille des N premiers registres 9₁ à 9_{N} est choisie en fonction du nombre de données utiles que l'on désire insérer dans chaque cellule 22, tout en prévoyant une marge de sécurité.

Le second ensemble de moyens 3₂, qui permet l'adaptation du réseau asynchrone 2 vers le réseau synchrone 1, comprend :
- des moyens 13 de réception et de stockage d'une cellule dans une seconde mémoire de transfert ;
- N seconds registres 14₁ à 14_{N} associés chacun à une voie de communication distincte ;
- des moyens 15 de transfert dans un des N seconds registres 14₁ à 14_{N} d'une partie utile d'une cellule contenue dans la seconde mémoire de transfert ;
- des moyens 16 de génération d'une trame par prélèvement sélectif dans les N seconds registres 14₁ à 14_{N} de blocs de données dont la taille correspond à celle des N IT constituant une trame ;
- des moyens 17 de transmission d'une trame générée par les moyens 16 de génération d'une trame.

La partie inférieure de la figure 1 présente un schéma synoptique d'un mode de réalisation préférentiel d'un procédé de désentrelacement - décodage selon l'invention.

A la réception, la phase de désentrelacement - décodage permet, à partir de paquets de symboles reçus 9, d'obtenir une séquence reçue 10 de symboles d'information transmis. Les symboles reçus 9 sont obtenus, à l'émission, grâce au procédé de codage - entrelacement expliqué ci-dessus en relation avec la partie supérieure de la figure 1. L'objectif est d'obtenir une séquence reçue 10 égale à la séquence source 1.

Ce procédé de désentrelacement - décodage comprend les étapes suivantes (cf également la figure 2B qui montre un exemple de matrice étendue de réception) :
- construction 11 d'une matrice étendue de réception 22' à L lignes et C colonnes en rangeant les symboles d'un même paquet reçu 9 dans une même ligne ou une même colonne selon que les étapes d'écriture 3 et de lecture 7 ont été faites ligne par ligne ou colonne par colonne de cette matrice étendue de réception 22'. Ainsi, on recrée en réception une matrice étendue 22' qui, mis à part les symboles erronés du fait de la transmission dans le canal 8, est identique à celle créée à l'émission ;
- réalisation, selon des colonnes des premier I' et second II' quadrants de la matrice étendue de réception 22', d'un premier décodage 12 correspondant au premier codage 5. Ce premier décodage permet, grâce aux éléments de redondance du second quadrant II', r'_{i,j} avec i ε [1, L-s] et j ε [ 1, k], de corriger des erreurs parmi les symboles du premier quadrant I', x'₁ à x'ₛₖ ;
- réalisation, selon des lignes des premier I' et troisième III' quadrants de la matrice étendue de réception 22', d'un second décodage 13 correspondant au second codage 6. Ce second décodage permet, grâce aux éléments de redondance du troisième quadrant III', t'_{i,j} avec i ε [1, s] et j ε [1, C-k], de corriger des erreurs parmi les symboles du premier quadrant I', x'₁ à x'ₛₖ ;
- lecture 14 ligne par ligne ou colonne par colonne (selon que les étapes

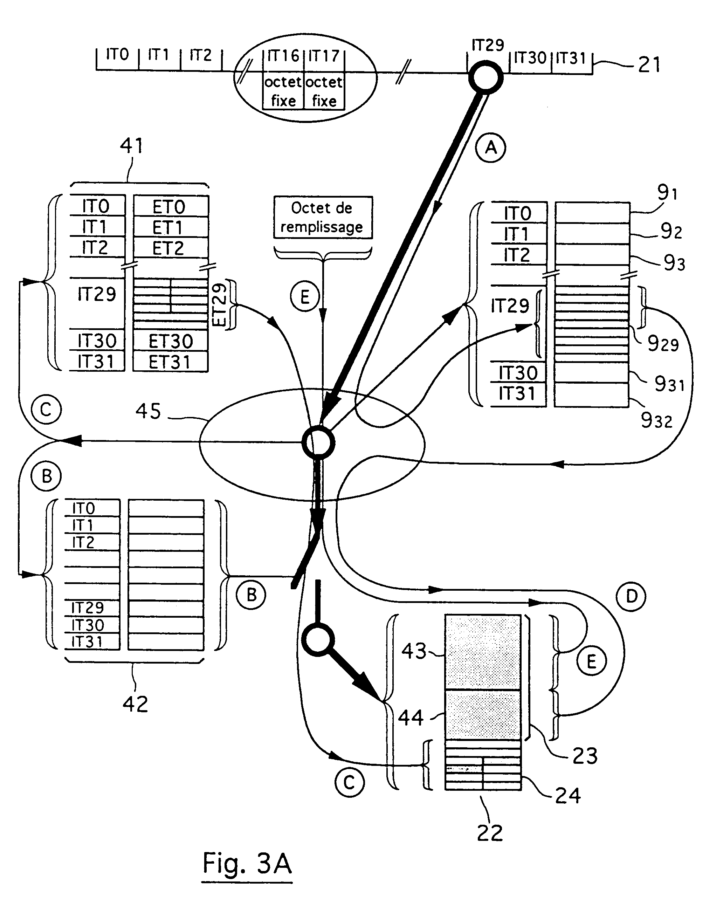

La figure 3A présente le cas d'une adaptation du réseau synchrone vers le réseau asynchrone. Le dispositif d'adaptation 3, ou plus précisément le premier ensemble de moyens 3₁ du dispositif d'adaptation 3, comprend, en plus des moyens présentés sur la figure 1, une première table de correspondance 41, et des premiers moyens 45 d'inentification d'une voie de communication.

La première table de correspondance 41 associe un entête de cellule ET0 à ET31 à chaque position distincte d'intervalle IT0 à IT31 dans une trame, c'est-à-dire à chaque voie de communication distincte. Généralement, un entête est fixé pour toute la durée d'une connexion.

Les premiers moyens 45 d'identification d'une voie de communication ont pour fonction de :
- déterminer une position IT (entre 0 et 31 dans l'exemple de la figure 3A) pour un intervalle de temps IT0 à IT31 stocké dans un premier registre 9₁ à 9₃₂, et
- interroger la première table de correspondance 41 afin de connaître l'entête de cellule ET0 à ET31 associé à la position d'IT déterminée auparavant.

Dans le mode de réalisation présenté sur la figure 3A, le premier ensemble de moyens 3₁ comprend également des moyens 42 d'autorisation de la création d'une cellule 22 pour un IT donné.

Les principales étapes, référencées A à E sur la figure 3A, de la génération d'une cellule 22 à partir de trames 21 sont maintenant présentées.

Etape A : pour chaque trame reçue 21, chaque IT de cette trame est stocké dans un registre distincte ou une mémoire spécifique distincte 9₁ à 9₃₂ (qui correspond à un premier registre 9₁ à 9_{N} de la figure 1). Sur la figure 3A, on a présenté l'exemple du traitement de l'IT 29.

Etape B : le dispositif détermine si pour l'IT traité, il existe une autorisation de créer une cellule 22. Une telle autorisation existe si le registre recevant l'IT traité est plein.

Etape C : grâce à la première table de correspondance 41, les premiers moyens 45 d'identification d'une voie de communication déterminent l'entête (ET 29 dans cet exemple) traité (IT 29 dans cet exemple). S'il existe une autorisation de créer une cellule 22, cet entête ET 29 constitue l'entête 24 de la cellule à créer 22.

Etape D : le contenu du registre plein 929 est transféré dans le champ de données 23 de la cellule à créer 23, et en constitue la partie utile 44.

Etape E : si la taille de la partie utile 44 est inférieure à la taille du champ de données 23, l'espace vide ou zone de complément 43 est comblé avec des octets de remplissage. ll est à noter que cette partie utile 44 du champ de données 23 peut présenter une taille variable et fonction de la voie de communication à laquelle est associée la cellule 22. On parle également, dans ce cas, de taux variable de remplissage de la cellule, ce taux étant défini comme le rapport entre la taille de la partie utile 44 et celle du champ de données. On peut alors stocker en mémoire le taux de remplissage associé à chacune des voies de communication.

De plus, les cellules 22 étant générées dans la première mémoire de transfert, on peut prévoir que celle-ci comporte une zone préremplie de données de remplissage (par exemple des zéros). Cette zone préremplie permet d'éviter, ou à tout le moins limiter, le transfert de données de remplissage lors de chaque génération de cellule.

Les premiers registres 9₁ à 9_{N} recevant les IT des trames reçues sont par exemple des mémoires du type premier entré-premier sorti (First In - First Out (ou FIFO) en anglo-saxon).

Dans un cas particulier, le réseau synchrone transmet des trames MIC comprenant chacune 32 IT (d'un octet chacun), et le réseau asynchrone transmet des cellules ATM (de 53 octets répartis en 5 octets d'entête, 1 octet de protection et 47 octets de données).

Dans ce cas, les IT 16 et 17 sont des octets de signalisation. Dans l'exemple présenté, les registres associés sont de simples registres à mémoire fixe car on suppose que le traitement de la signalisation est effectué par des moyens spécifiques (non représentés).

La figure 3B présente le cas d'une adaptation du réseau asynchrone vers le réseau synchrone. Le second ensemble de moyens 3₂ du dispositif 3 comprend, en plus des moyens présentés sur la figure 1, une seconde table de correspondance 51, et des seconds moyens 52 d'identification d'une voie de communication.

La seconde table de correspondance 51 associe une position distincte d'IT dans une trame à chaque identificateur de voie de communication distinct contenu dans un entête de cellule 34. Ainsi, dans le cas d'une cellule ATM, l'identificateur de voie de communication est par exemple l'identificateur de voie virtuelle VCI (pour Virtual Channel Identifier en anglo-saxon).

Les seconds moyens 52 d'identification d'une voie de communication ont pour fonction de :
- extraire l'identificateur de voie de communication VCI contenu dans l'entête 34 de la cellule à traiter 32 ; et
- interroger la seconde table de correspondance 51 afin de connaître la position d'IT (de IT 0 à IT 31) associée à l'identificateur de voie de communication VCI extrait auparavant.

La génération d'une trame 31 est maintenant présentée de façon simplifiée à travers trois étapes principales, référencées F à I sur la figure 3B.

Etape F : pour chaque cellule reçue 32, les seconds moyens 52 d'identification d'une voie de communication extraient le VCI contenu dans l'entête 34 de la cellule 32.

Etape G : la position d'IT correspondant à ce VCI est fournie aux seconds moyens 52 d'identification par la seconde table de correspondance 51. Dans cet exemple, le VCI 2 est associé à l'IT 31.

Etape H : les données utiles du champ de données 33 de la cellule 32 sont déposées dans le second registre 14₁ à 14_{N} associé à la position d'IT indiquée par la seconde table de correspondance.

Etape I : pour chaque trame à générer 31, un bloc de données utiles équivalent à un IT est lu dans chacun des seconds registres 14₁ à 14_{N} évoqués lors de l'étape H, et écrit dans la trame à générer 31 en tant qu'IT (avec la position d'IT évoquée dans l'étape H).

Les seconds registres recevant les parties utiles de cellules sont par exemple des mémoires FIFO.

Lors de leur traitement, les cellules 32 étant stockées dans la seconde mémoire de transfert, on peut prévoir un pointeur de cette seconde mémoire de transfert permettant de sélectionner uniquement la zone utile du champ de données 33 de la cellule 32, de façon à faciliter le transfert des données utiles de cette zone utile vers le second registre adéquat.

Dans un sens d'adaptation comme dans l'autre, on peut prévoir de remplacer chaque IT inexploitable par une donnée de même taille et représentative d'un silence. On peut par exemple effectuer un tel remplacement dans les moyens 10 de répartition des IT (dans le sens d'adaptation du réseau synchrone 1 vers le réseau asynchrone 2) et dans les moyens 15 de transfert d'une partie utile d'une cellule (dans le sens d'adaptation du réseau asynchrone 2 vers le réseau synchrone 1).

Afin de pouvoir regrouper la plupart des moyens 8, 10, 11, 15, 16, 17 constituant le dispositif de l'invention (exceptés notamment les moyens d'émission 12 et de réception 13 de cellule qui sont par exemple réalisés avec un séquentiel câblé) dans un unique microprocesseur, on peut prévoir un fonctionnement en temps partagé :
- pendant que les moyens 13 de réception d'une cellule sont actifs, l'ensemble de moyens 3₁, les moyens 16 de génération d'une trame et les moyens 17 sont également actifs ; et
- pendant que les moyens 12 d'émission d'une cellule sont actifs, l'ensemble de moyens 3₂ ,les moyens 8 de réception d'une trame et les moyens 10 de répartition des IT sont également actifs.

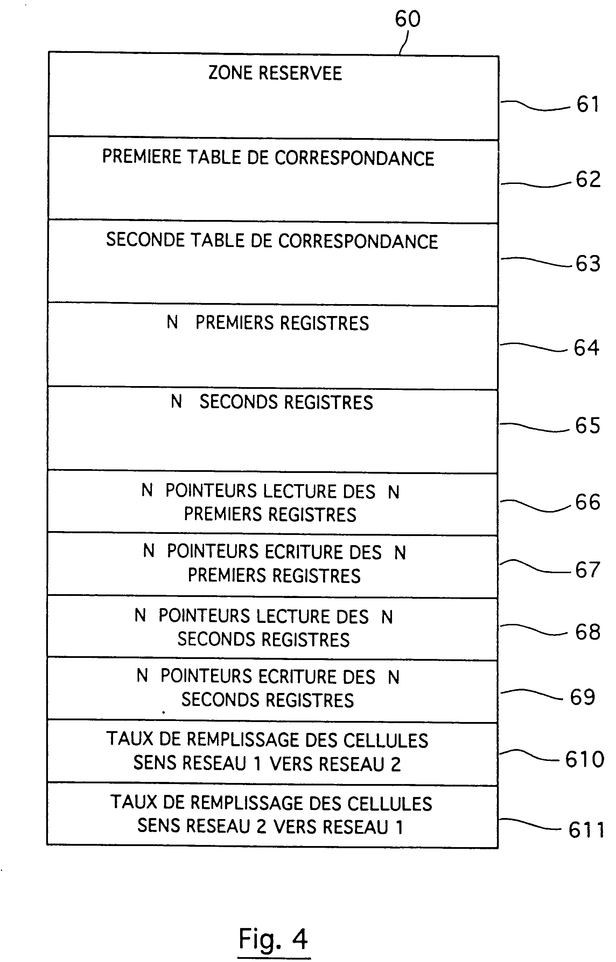

La figure 4 présente un exemple d'utilisation d'une mémoire unique 61 dans un dispositif d'adaptation de l'invention. Cette mémoire unique 60 comprend :
- une zone réservée 61 ;
- une zone 62 comprenant la première table de correspondance ;
- une zone 63 comprenant la seconde table de correspondance ;
- une zone 64 comprenant les N premiers registres ;
- une zone 65 comprenant les N seconds registres ;
- une zone 66 comprenant N pointeurs de lecture des N premiers registres ;
- une zone 67 comprenant N pointeurs d'écriture des N premiers registres ;
- une zone 68 comprenant N pointeurs de lecture des N seconds registres ;
- une zone 69 comprenant N pointeurs d'écriture des N seconds registres ;
- une zone 610 comprenant les taux de remplissage des cellules dans le sens réseau synchrone vers réseau asynchrone ; et
- une zone 611 comprenant les taux de remplissage des cellules dans le sens réseau asynchrone vers réseau synchrone.

A chaque premier ou second registre, on associe un pointeur de lecture et un pointeur d'écriture dont la programmation peut par exemple permettre d'utiliser chaque registre comme s'il s'agissait d'une mémoire FIFO.

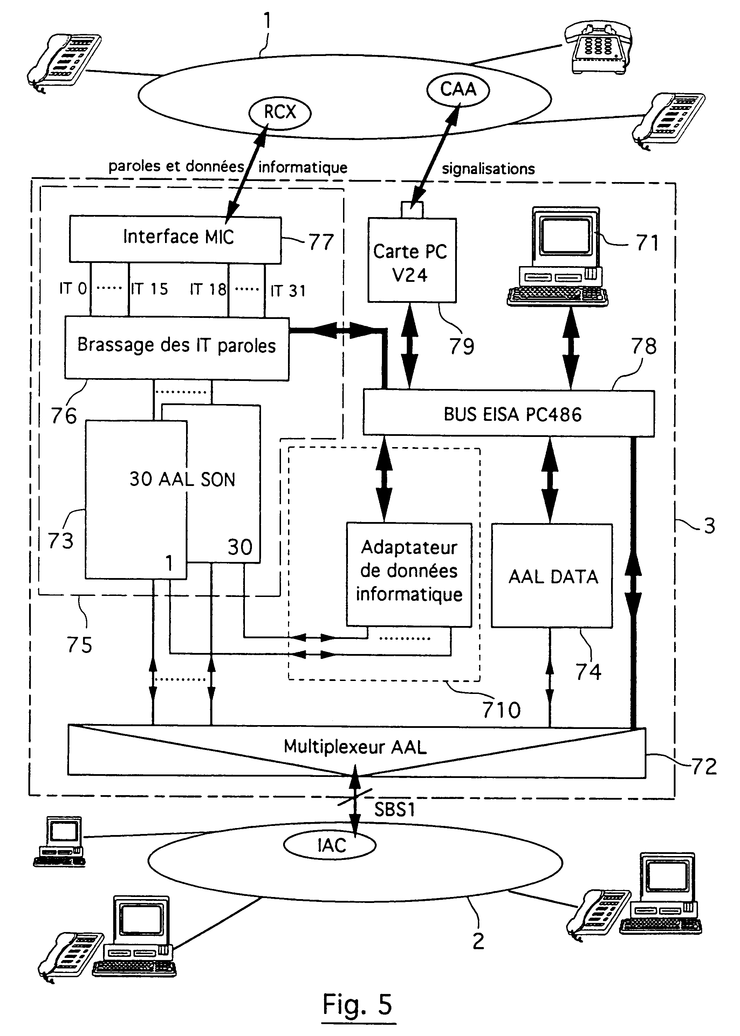

La figure 5 présente un schéma synoptique d'un mode de réalisation particulier d'un dispositif d'adaptation selon l'invention.

Le réseau temporel synchrone 1 est par exemple un réseau ALCATEL 4300 (transport de données en mode octet sur IT-MIC), et le réseau temporel asynchrone 2 est par exemple un réseau SONATE (réseau ATM avec transport de données en mode cellule).

Les fonctions du dispositif d'adaptation 3 constituent un sous-ensemble des fonctions réalisées par le serveur de contrôle de communication (SCDC), à savoir :
- l'adaptation entre les unités de données transférées dans la chaîne ATM (cellules) et celles transférées dans la chaîne synchrone (octets) ; et
- le transport de signalisations échangées entre les deux réseaux 1, 2.

Le dispositif d'adaptation 3 est vu du réseau synchrone 1 comme un concentrateur de terminaisons (par exemple, les accès des terminaux ou des serveurs SONATE à la chaîne ATM) desservi par un MIC, à ceci près que les canaux de signalisation (IT 16 et 17) ainsi que la voie MIC Adresse (VMA) sont supportés par une liaison directe (par exemple V24) entre le SCDC et le réseau synchrone 1.

L'unité de traitement 71 du SCDC, par exemple un PC 486, assure notamment :
- la conversion des messages de signalisation échangés entre les deux réseaux 1, 2 ; et
- le chargement et le contrôle de correspondance entre entêtes de cellules et numéros d'IT-MIC pour le brassage des voies de parole.

Dans ce mode de réalisation particulier, le dispositif d'adaptation 3 comprend :
- un multiplexeur d'AAL 72 (pour ATM Adaptation Layer en anglo-saxon (Couche d'adaptation ATM)), qui aiguille les cellules concernées vers chaque accès physique d'AAL 73 (sens réseau asynchrone vers dispositif d'adaptation 3) ou multiplexe les cellules en provenance des AAL 73 (sens dispositif d'adaptation 3 vers réseau asynchrone 2). Ces AAL sont par exemple des AAL son, c'est-à-dire conçu pour traiter le son.
   Il est à noter que le multiplexeur d'AAL 72 peut également effectuer des traductions de VCI (identificateur de voie virtuelle) ainsi que le calcul du code de protection HEC (contrôle d'erreur sur l'entête) entre AAL 73 et réseau ATM 2. Ce multiplexeur 72 est par exemple celui utilisé pour les terminaux et autres serveurs de SONATE ;
- un premier module d'adaptation (AAL - Data) 74 entre cellules ATM et tous types d'unités de données transportées de/vers le SCDC ; les cellules concernées sont essentiellement relatives aux messages de signalisation ou d'administration ;
- un second module d'adaptation 75 entre cellules ATM et IT - MIC qui assure les fonctions d'adaptation cellules/trames MIC (73) sur 30 voies (les 2 autres voies étant des voies de signalisation traitées à part), de brassage (76) entre entêtes de cellules et IT MIC, ainsi que l'interfaçage (77) avec un MIC de raccordement du réseau synchrone 1 ;
- une unité de traitement 71 du SCDC, par exemple du type PC 486 à bus EISA 78 ; les cartes constituant le dispositif d'adaptation 3 sont connectées sur ce bus 78 ;
- une interface 79 de liaison série V24/PC, qui sert à l'acheminement des signalisations entre SCDC et le réseau synchrone 1 ;
- un troisième module d'adaptation 710 de données informatiques traitées par des terminaux voix-données éventuellement accessibles à travers la chaîne ATM.

Ainsi, dans ce mode de réalisation, toutes les données de signalisation sont traitées à part. Il est clair cependant que l'invention concerne également le cas où les données de signalisation et les données utiles sont traitées par des mêmes moyens (par exemple un ou plusieurs microprocesseurs).

## Revendications

1. Dispositif d'adaptation entre un premier réseau de communication du type véhiculant un premier type de signal organisé en trames constituées chacune de N intervalles de temps, chaque intervalle de temps étant associé à une voie de communication distincte, et un second réseau de communication du type véhiculant un second type de signal organisé en cellules de taille fixe comprenant chacune un en-tête et un champ de données, les données d'une même cellule étant associées à une même voie de communication,
caractérisé en ce qu'il comprend, dans le sens d'une adaptation dudit premier réseau de communication (1) vers ledit second réseau de communication (2) :
- des moyens (8) de réception d'une trame (21₁ à 21₆) ;
- N premiers registres (9₁ à 9_{N}) associés chacun à une voie de communication distincte ;
- des moyens (10) de répartition entre lesdits N premiers registres des intervalles de temps (IT) de ladite trame reçue ;
- des moyens (11) de génération d'une cellule (22) par transfert dans une première mémoire de transfert du contenu d'un desdits N premiers registres quand celui-ci a atteint un seuil de remplissage prédéterminé, c'est-à-dire quand celui-ci contient un nombre de données égal au nombre de données à placer dans une cellule ;
- des moyens (12) de transmission d'une cellule générée par lesdits moyens (11) de génération d'une cellule ;
et en ce qu'il comprend, dans le sens d'une adaptation dudit second réseau de communication (2) vers ledit premier réseau de communication (1) :
- des moyens (13) de réception et de stockage d'une cellule (32) dans une seconde mémoire de transfert ;
- N seconds registres (14₁ à 14_{N}) associés chacun à une voie de communication distincte ;
- des moyens (15) de transfert dans un des N seconds registres d'une partie utile d'une cellule contenue dans la seconde mémoire de transfert ;
- des moyens (16) de génération d'une trame (31₁ à 31₆) par prélèvement sélectif dans les N seconds registres de blocs de données dont la taille correspond à celle des N intervalles de temps constituant une trame ;
- des moyens (17) de transmission d'une trame générée par lesdits moyens de génération d'une trame.

2. Dispositif selon la revendication 1, caractérisé en ce qu'il comprend, dans le sens d'une adaptation dudit premier réseau de communication (1) vers ledit second réseau de communication (2) :
- une première table de correspondance (61) associant un en-tête de cellule distinct à chaque position distincte d'intervalle de temps dans une trame ;
- des premiers moyens (45) d'identification d'une voie de communication par détermination d'une position d'intervalle de temps dans une trame pour les intervalles de temps stockés dans un premier registre ayant atteint ledit seuil de remplissage prédéterminé, puis interrogation de ladite première table de correspondance afin de connaître l'en-tête de cellule associé à la position d'intervalle de temps déterminée auparavant,
lesdits premiers moyens d'identification d'une voie de communication indiquant auxdits moyens de génération d'une cellule, lorsqu'un premier registre est plein, l'en-tête à transférer dans la première mémoire de transfert avec le contenu dudit premier registre plein.

3. Dispositif selon l'une quelconque des revendications 1 et 2, caractérisé en ce qu'il comprend, dans le sens d'une adaptation dudit second réseau de communication (2) vers ledit premier réseau de communication (1) :
- une seconde table de correspondance (51) associant une position distincte d'intervalle de temps dans une trame à chaque identificateur de voie de communication distinct contenu dans un en-tête de cellule ;
- des seconds moyens (52) d'identification d'une voie de communication par extraction d'un identificateur de voie de communication contenu dans l'en-tête de la cellule stockée dans la seconde mémoire de transfert, puis interrogation de ladite seconde table de correspondance afin de connaître la position d'intervalle de temps associée à l'identificateur de voie de communication extrait auparavant,
lesdits seconds moyens d'identification d'une voie de communication indiquant auxdits moyens de transfert dans quel second registre doit être transférée la partie utile de la cellule contenue dans la seconde mémoire de transfert.

4. Dispositif selon l'une quelconque des revendications 1 à 3, caractérisé en ce que ladite partie utile d'une cellule est une zone utile (44) du champ de données (23) qui possède une taille variable et fonction de la voie de communication à laquelle est associée ladite cellule.

5. Dispositif selon l'une quelconque des revendications 1 à 4, caractérisé en ce que la taille du champ de données (23) d'une cellule est supérieure audit seuil de remplissage prédéterminé des N premiers registres, et en ce que ladite première mémoire de transfert comporte une zone de complément préremplie de données de remplissage, la taille de ladite zone de complément étant égale à la différence entre ladite taille du champ de données et ledit seuil de remplissage prédéterminé des N premiers registres.

6. Dispositif selon l'une quelconque des revendications 1 à 5, caractérisé en ce que lesdits moyens (15) de transfert comprennent au moins un pointeur de ladite seconde mémoire de transfert permettant de sélectionner uniquement une zone utile (44) du champ de données de la cellule stockée dans ladite seconde mémoire de transfert.

7. Dispositif selon l'une quelconque des revendications 1 à 6, caractérisé en ce que, lorsque lesdits moyens (10) de répartition des intervalles de temps détectent un intervalle de temps inexploitable, ils le remplacent par une donnée représentative d'un silence, et en ce que, lorsque lesdits moyens (15) de transfert d'une partie utile d'une cellule détectent une donnée inexploitable parmi des données constituant ladite partie utile, ils la remplacent par une donnée représentative d'un silence.

8. Dispositif selon l'une quelconque des revendications 1 à 7, caractérisé en ce que, lorsque lesdits moyens (13) de réception et de stockage d'une cellule sont actifs, lesdits moyens (8) de réception d'une trame, lesdits moyens (10) de répartition des intervalles de temps, lesdits moyens (11) de génération d'une cellule, lesdits moyens (16) de génération d'une trame, et les moyens (17) de transmission d'une trame sont également actifs, et en ce que lorsque lesdits moyens (12) de transmission d'une cellule sont actifs, lesdits moyens (8) de réception d'une trame, lesdits moyens (10) de répartition des intervalles de temps, lesdits moyens (15) de transfert d'une partie utile du champ de données d'une cellule, lesdits moyens (16) de génération d'une trame, et les moyens (17) de transmission d'une trame sont également actifs.

9. Dispositif selon l'une quelconque des revendications 1 à 8, caractérisé en ce que lesdits N premiers registres (9₁ à 9_{N}) et lesdits N seconds registres (14₁ à 14_{N}) sont des mémoires du type premier entré - premier sorti.

10. Dispositif selon l'une quelconque des revendications 3 à 9, caractérisé en ce que lesdits N premiers registres (9₁ à 9_{N}), lesdits N seconds registres (14₁ à 14_{N}), ladite première table de correspondance (61) et ladite seconde table de correspondance (51) sont réalisés avec une mémoire unique (60).

11. Dispositif selon l'une quelconque des revendications 1 à 10, caractérisé en ce que ledit premier type de signal est organisé en trames MIC et en ce que ledit second type de signal est organisé en cellules ATM.
